# EUROPÄISCHE PATENTANMELDUNG

(11) **EP 0 763 440 A2**
(43) Veröffentlichungstag der Anmeldung: **19.03.1997**
(21) Anmeldenummer: 96114395.5
(22) Anmeldetag: 09.09.1996
(51) Int. Cl.: B60K 15/00, B60R 7/00

(54) **Haltevorrichtung für insbesondere einen Transportbehälter**

(30) Priorität: 08.09.1995 DE 29514403 U
(71) Anmelder: Klesz, Michael, 49808 Lingen (DE)
(72) Erfinder: Klesz, Michael, 49808 Lingen (DE)
(74) Vertreter: Busse & Busse Patentanwälte

(57) **Zusammenfassung**

Eine Haltevorrichtung für insbesondere einen Transportbehälter, beispielsweise einen Kraftstoffkanister im Kofferraum eines Fahrzeugs, ist mit einem quaderförmigen Einbaubehälter aus Kunststoff versehen, von dessen Bodenwandung ausgehend sich jeweilige Längs- und Querseitenwände zu einem oberen Öffnungsbereich hin erstrecken. Der Einbaubehälter (1) weist zumindest bereichsweise an seinen Wandungen eine Gitterstruktur (4) auf.

## Beschreibung

Die Erfindung betrifft eine Haltevorrichtung für insbesondere einen Transportbehälter, beispielsweise für einen Kraftstoffkanister oder dgl. im Kofferraum eines Fahrzeugs mitzuführenden Transportgegenstand, gemäß dem Oberbegriff des Anspruches 1.

Eine bekannte Haltevorrichtung (DE-GM 76 03 434) ist zur Aufnahme eines Kraftstoffkanisters in einem Kraftfahrzeug als ein Einbaubehälter ausgebildet, der als quarderförmiger, oben offener Hohlkörper mit vollflächig aus Kunststoffmaterial bestehenden Wandungen geformt ist. Der Einbaubehälter weist bei nachteilig materialintensiver Herstellung eine weitgehend steife Aufnahmekontur auf, ist insgesamt unhandlich und zur Anpassung an unterschiedliche Einbaubedingungen im Fahrzeug mit hohem konstruktiven Aufwand verbunden.

Der Erfindung liegt die Aufgabe zugrunde, eine Haltevorrichtung der eingangs genannten Art zu schaffen, die mit vermindertem Materialeinsatz herstellbar ist, unterschiedliche Transport-Behältergrößen weitgehend flexibel aufnehmen kann und bei einer optisch ansehnlichen Gestaltung mit geringem Montageaufwand einen variablen Einsatz in unterschiedlichen Fahrzeugen ermöglicht.

Zur Lösung dieser Aufgabe zeichnet sich die Haltevorrichtung für insbesondere einen Transportbehälter durch die im kennzeichnenden Teil des Anspruches 1 angegebenen Merkmale aus. Hinsichtlich wesentlicher weiterer Ausgestaltungen der Haltevorrichtung wird auf die Ansprüche 2 bis 15 verwiesen.

Die erfindungsgemäße Haltevorrichtung für Kraftstoffbehälter ist als ein insbesondere im PKW-Kofferraum installierbares Montagebauteil vorgesehen, das sowohl bei der Neuherstellung eines Fahrzeuges sofort montiert werden kann als auch bei anderen Fahrzeugtypen mit geringem Aufwand nachrüstbar ist.

Die erfindungsgemäße Haltevorrichtung für Behälter weist mit den sich zumindest bereichsweise kreuzenden Profilstreben eine im wesentlichen einstückig formbare Strebenkonstruktion auf, die einen den Transportbehälter in einem Abstützungseingriff hinreichend sicher festlegenden Innenraum bildet und dabei über eine variable Dimensionierung der jeweiligen Strebenteilbereiche gleichzeitig so flexibel ist, daß eine Ausdehnung des aufgenommenen Transportbehälters im Bereich dessen Behälterwandungen, beispielsweise bei einem sich durch Sonneneinstrahlung erwärmenden Kunststoff-Kraftstoffkanister, über eine elastische Dehnung der Profilstreben aufgenommen wird und eine gefährdungsfreie Halterung des Transportbehälters auch unter rauhen Betriebsbedingungen erreicht ist.

Weitere Einzelheiten und Vorteile der Erfindung ergeben sich aus der nachfolgenden Beschreibung und der Zeichnung, die ein Ausführungsbeispiel einer erfindungsgemäßen Haltevorrichtung veranschaulicht. In der Zeichnung zeigen:
- Fig. 1: eine Perspektivdarstellung einer einen Einbaubehälter und einen Spanngurt aufweisende Haltevorrichtung in Einbaulage,
- Fig. 2: eine Perspektivdarstellung der Haltevorrichtung gemäß Fig. 1 in einer einen Kraftstoffkanister aufnehmenden Beladephase,
- Fig. 3: eine Perspektivdarstellung ähnlich Fig. 2 mit dem Kraftstoffkanister in Transportstellung,
- Fig. 4: eine Vorderansicht des Einbaubehälters als Einzelformteil,
- Fig. 5: eine Seitenansicht des Einbaubehälters gemäß Fig. 4,
- Fig. 6: eine Rückansicht des Einbaubehälters gemäß Fig. 4,
- Fig. 7: eine Draufsicht des Einbaubehälters gemäß Fig. 4,
- Fig. 8: eine teilweise geschnittene Explosivdarstellung des Einbaubehälters bei dessen Montage an einer Karosseriewandung eines Fahrzeugs,
- Fig. 9: eine Explosivdarstellung ähnlich Fig. 8 mit dem Einbaubehälter in Verbindungsstellung an der Karosseriewandung, und
- Fig. 10: eine vergrößerte Einzeldarstellung eines Verbindungsgliedes zur Festlegung des Einbaubehälters.

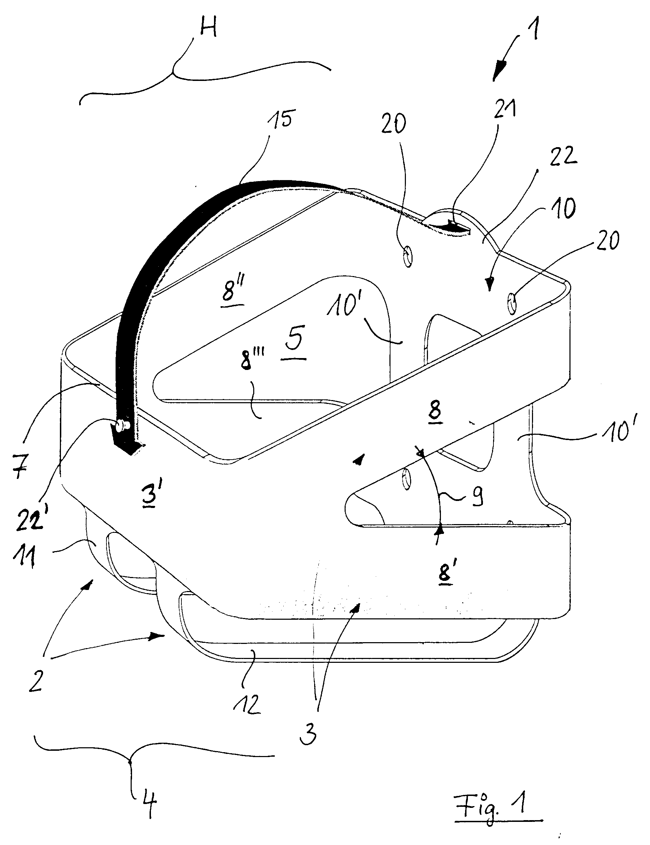

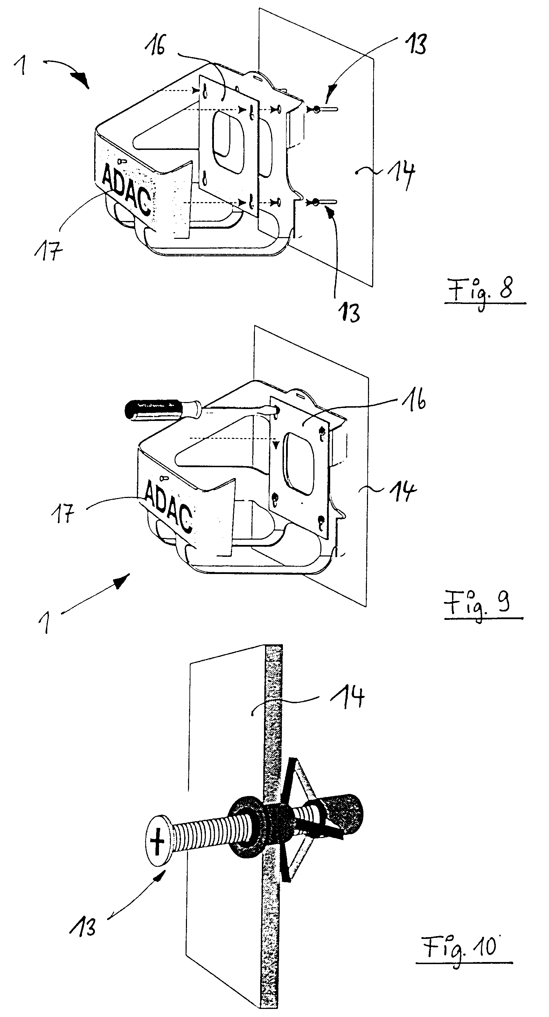

In Fig. 1 ist in einer perspektivischen Einzeldarstellung eine Haltevorrichtung H veranschaulicht, die einen als ein einstückiger Stütz- und Rückhaltebehälter ausgebildeten Einbaubehälter 1 aufweist, der seinerseits mit jeweiligen wandungsseitigen Profilstreben 2, 3 eine Gitterstruktur 4 bildet. In zweckmäßiger Ausführungsform ist die Gitterstruktur 4 im Bereich einer in Gebrauchsstellung des Einbaubehälters 1 (Fig. 2, Fig. 3) zum Innenraum des Fahrzeugs (nicht dargestellt) hin gerichteten Öffnungskontur 5 (Fig. 7) so geformt, daß ein aufzunehmender Transportbehälter wandungsseitig umfaßbar ist.

Ein beispielsweise in den Einbaubehälter 1 einzuführender bzw. aus dieser zu entnehmender Kraftstoffbehälter 6 kann dabei über eine Führungskante 7 im Bereich einer vorderen oberen Profilstrebe 3' in den von der Gitterstruktur 4 umgebenen Innenraum ein- bzw. ausgeschwenkt werden kann (Pfeil 8, Fig. 2). Damit kann der Einbaubehälter 1 in unterschiedlichsten Fahrzeugtypen auch unter beengten Platzverhältnissen so angeordnet werden, daß einerseits eine gute Zugänglichkeit gewährleistet und andererseits auch bei einer Bremsbeschleunigung oder einem Crash die Sicherheit des Rückhaltesystems gewährleistet ist.

In der dargestellten Ausführungsform der Gitterstruktur 4 ist die Führungskante 7 im Bereich der Längsseite der oberen Profilstrebe 3' vorgesehen, wobei ebenso denkbar ist, eine von jeweiligen Querstreben 8,8', 8'', 8''' so auszubilden, daß diese die Führungsfunktion übernimmt und eine der vorbeschriebenen Bewegung des Kunststoffbehälters 6 entsprechende Handhabung möglich ist.

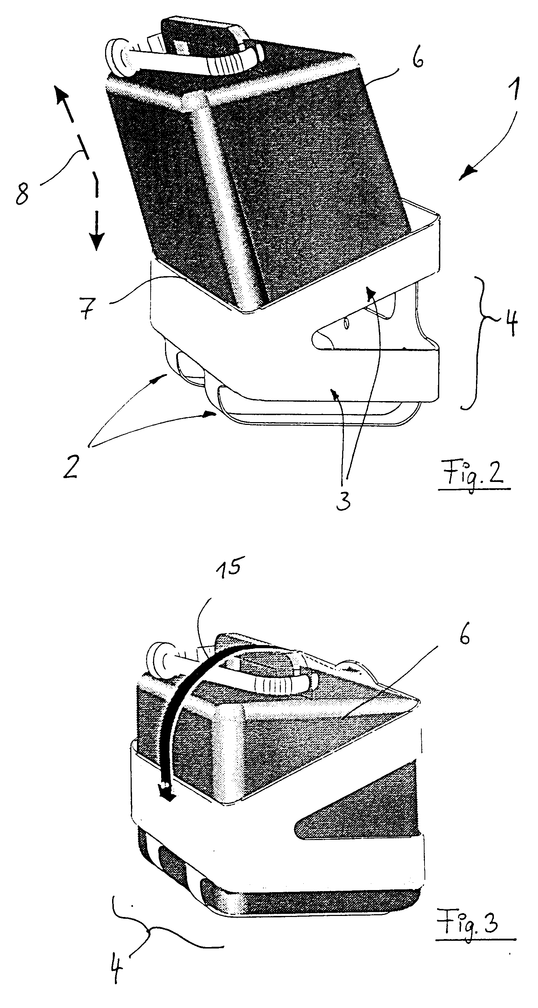

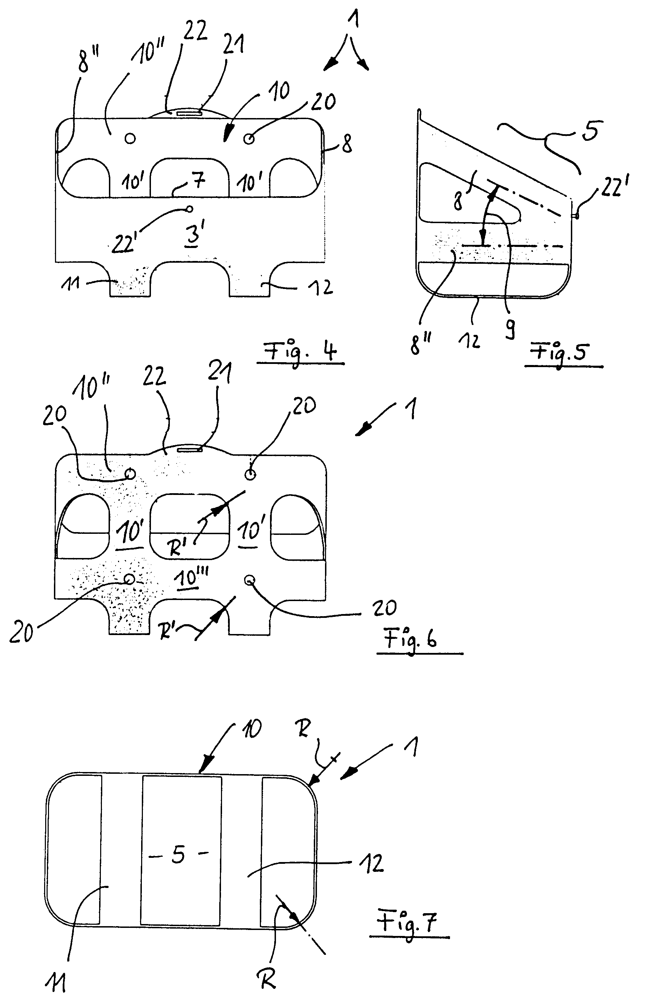

Die verschiedenen Ansichten des Einbaubehälters 1 und dessen Gitterstruktur 4 gemäß Fig. 4 bis 7 verdeutlichen, daß die obere Profilstrebe 3' einstückig in die Querstreben 8, 8', 8'', 8''' übergeht und die beiden oberen Querstreben 8, 8'' mit einer Schrägstellung 9 zum Bereich einer Rückwand 10 hin verlaufen. Damit werden die Querstreben 8 und 8' als zugbelastbare Streben derart wirksam, daß sowohl in der Beladephase (Fig. 2) als auch in der mit dem Kraftstoffbehälter 6 (Fig. 3) belasteten Einbaulage eine hinreichende Stabilität durch die Gitterstruktur 4 gewährleistet ist. Die jeweiligen Bodenstreben 11, 12 können in zweckmäßiger Ausführung frei nach unten in den Innenraum des Fahrzeugs ragen, wobei die Verbindungselemente 13 (Fig. 8 bis 10) die Gewichtskraft des Kraftstoffbehälters 6 in die einen beispielsweise von der Fahrzeugkarosserie gebildeten Wandungsteil 14 übertragen.

Mit der beschriebenen und dargestellten Ausbildung des als einstückig formbarer Stütz- und Rückhaltebehälter vorgesehenen Einbaubehälters 1 mit den Profilstreben 2, 3 und den Bodenstreben 11, 12 ist gleichzeitig mit vorteilhaft geringem Materialaufwand ein an die Kontur des Kraftstoffbehälters 6 flexibel anpassbares, diesen lagestabil aufnehmendes und geräuschvermeidend umgreifendes Zusatz-Bauteil für insbesondere PKW geschaffen, das in zweckmäßiger Ausführung des Behälters 1 aus Kunststoff gefertigt sein kann. Dabei ist insbesondere die Anwendung von Polyethylen (HDPE) vorgesehen, so daß die Übertragung von Geräuschen und Fahrzeugvibrationen durch die Dämpfungseigenschaften des Materials und die Behälterformung mit der Gitterstruktur 4 weitgehend eingeschränkt ist. Außerdem ist der Kunststoff-Einbaubehälter 1 vollständig recyclebar. Im Innenraum des Behälters 1 können zusätzliche Dämpfungseinlagen (nicht dargestellt) vorgesehen sein, mit denen eine lagestabile und rutschfeste Abstützungen des Kraftstoffbehälters 6 erreicht ist.

In zweckmäßiger Ausführung kann der Kraftstoffbehälter 6 über einen an den Behälterwandungsteilen befestigten Spanngurt 15 zusätzlich gesichert sein. Der konstruktive Aufbau des Einbaubehälters 1 ist mit der Gitterstruktur 4 gleichwohl derart optimiert, daß insbesondere ein gefüllter Kraftstoffbehälter 6 soweit in den Innenraum einführbar ist (Fig. 3), daß der Kanister-Schwerpunkt unterhalb der Einführungskante 7 plaziert ist und damit ein auch bei Stoßbelastungen, beispielsweise bei einem Unfall, sicheres Rückhaltesystem geschaffen ist. Mit der Gitterstruktur 4 ist das System außerdem bei hinreichender Steife so elastisch, daß eine beispielsweise bei Wärmeeinwirkung aufretende Volumenvergrößerung des Kraftstoffbehälters 6 ohne Überlastungen sicher kompensiert wird.

In Fig. 8 bis 10 sind unterschiedliche Einbauphasen bei der Montage des Einbaubehälters 1 veranschaulicht, wobei in zweckmäßiger Ausführung eine Festlegung mittels als Verbindungselemente 13 vorgesehener Schrauben erfolgt. Damit kann nach einer schnellen Montage auch mit geringem Aufwand eine Demontage durchgeführt werden, so daß bei einer Nichtbenutzung des Behälters 1 der Nutzraum im Kraftfahrzeug freigegeben wird.

Im Bereich der Verbindungselemente 13 ist ebenfalls denkbar, einen Klettverschluß vorzusehen oder den Einbaubehälter 1 über eine Klebeverbindung festzulegen. In Fig. 8 und 9 ist eine zusätzliche Halteplatte 16 dargestellt, mit der der Behälter 1 sowohl an der Karosseriewandung 14 flächig festgeklemmt werden kann (Fig. 9) als auch mit geringem Aufwand demontierbar ist.

In zweckmäßiger Ausführung können die den Umfangsbereich des Einbaubehälters 1 als Gitter 4 bildenden Profilstreben 2, 3, 3', 8, 8', 8'', 8''', 10', 11, 12 so dimensioniert werden, daß an deren in Einbaulage sichtbaren Frontbereichen eine zusätzliche Werbefläche 17 (Fig. 8, Fig. 9) gebildet ist.

Die Perspektivdarstellungen des Einbaubehälters 1 gemäß Fig. 4 bis 7 verdeutlichen dessen Ausbildung im Bereich seiner Profilstreben mit jeweiligen Knotenbereichen, wobei diese im Bereich der Rückwand 10 jeweils mit einer Befestigungsöffnung 20 ausgebildet sind. Über diese Befestigungsöffnungen 20 ist eine Festlegung des eine Montage-Baueinheit mit der Halteplatte 16 bildenden Einbaubehälters 1 an der Karosseriewandung 14 mit geringem Aufwand möglich (Fig. 8 bis Fig. 10).

Zur Festlegung des Kraftstoffbehälters 6 ist im oberen Öffnungsbereich 7 des Einbaubehälters 1 ein sich zwischen der Rückwand 10 und der vorderen Längswand 3' erstreckender Spanngurt 15 vorgesehen, wobei dieser im Bereich der Rückwand 10 eine an einer oberen Profilstrebe 10'' befindliche Öffnung 21 (Fig. 4) durchgreift und im Bereich der vorderen Profilstrebe 3' an der Längswandung über ein Knopfteil 22' (Fig. 1) festlegbar ist. Die Öffnung 21 im Bereich der Rückwand 10 ist dabei an einem im wesentlichen vertikal verlaufenden Formansatz 22 vorgesehen, wobei dieser auch als ein horizontales Formteil (nicht dargestellt), beispielsweise nach Art einer Schlaufe, vorgesehen sein kann.

## Patentansprüche

1. Haltevorrichtung für insbesondere einen Transportbehälter, beispielsweise einen Kraftstoffkanister (6) im Kofferraum eines Fahrzeugs, die mit einem quaderförmigen Einbaubehälter aus Kunststoff versehen ist, von dessen Bodenwandung ausgehend sich jeweilige Längs- und Querseitenwände zu einem oberen Öffnungsbereich hin erstrecken, **dadurch gekennzeichnet**, daß der Einbaubehälter (1) zumindest bereichsweise an seinen Wandungen eine Gitterstruktur (4) aufweist.

2. Haltevorrichtung nach Anspruch 1, dadurch gekennzeichnet, daß die Gitterstruktur (4) von jeweiligen Profilstreben (2, 3; 3', 8, 8', 8'', 10',10'', 10'''; 11, 12) gebildet ist.

3. Haltevorrichtung nach Anspruch 1 oder 2, dadurch gekennzeichnet, daß die Gitterstruktur (4) einstückig geformt ist.

4. Haltevorrichtung nach einem der Ansprüche 1 bis 3, dadurch gekennzeichnet, daß die Profilstreben (2) der Gitterstruktur (4) im Bereich der Bodenwandung von zwei parallel vom Unterrand der vorderen Längswand-Profilstrebe (3') zum Unterrand der Rückwand (10) verlaufenden Auflagegurten (11, 12) gebildet sind.

5. Haltevorrichtung nach einem der Ansprüche 1 bis 4, dadurch gekennzeichnet, daß die vordere Längswand-Profilstrebe (3') in jeweils zwei die Querseitenwandung bildende Querstreben (8, 8', 8'', 8''') übergeht.

6. Haltevorrichtung nach Anspruch 5, dadurch gekennzeichnet, daß die obere Querstrebe (8, 8'') nach Art eines Diagonalstabs an einer Oberrand-Strebe (10'') der Rückwand (10) angreift.

7. Haltevorrichtung nach Anspruch 5 oder 6, dadurch gekennzeichnet, daß die untere Querstrebe (8', 8''') mit der vorderen Längswand-Profilstrebe (3') und einem Profilstrebenbereich (10''') der Rückwand (10) in einer eine gleichebenig umlaufende Unterkante bildenden Behälterkontur angeordnet ist.

8. Haltevorrichtung nach einem der Ansprüche 1 bis 7, dadurch gekennzeichnet, daß die Profilstreben (2, 3; 3', 8, 8', 8'', 8''', 10', 11, 12) innerhalb der jeweiligen Boden-, Seiten- und/oder Rückwandungen einen Flächenanteil von 10 bis 50%, vorzugsweise 30%, aufweisen.

9. Haltevorrichtung nach einem der Ansprüche 1 bis 8, dadurch gekennzeichnet, daß die Profilstreben (2, 3; 3', 8, 8', 8'', 8''', 10', 11, 12) nach Art von Gurtbändern jeweilige Knotenbereiche definieren.

10. Haltevorrichtung nach einem der Ansprüche 1 bis 9, dadurch gekennzeichnet, daß in Knotenbereichen der Rückwand (10) jeweils eine Befestigungsöffnung (20) vorgesehen ist.

11. Haltevorrichtung nach einem der Ansprüche 1 bis 10, dadurch gekennzeichnet, daß im oberen Öffnungsbereich (5) ein sich zwischen der Rückwand (10) und der vorderen Längswand (3') erstreckender Spanngurt (15) vorgesehen ist.

12. Haltevorrichtung nach Anspruch 10, dadurch gekennzeichnet, daß der Spanngurt (15) im Bereich der Rückwand (10) eine an der oberen Profilstrebe (10'') befindliche Öffnung (21) durchgreift und im Bereich der vorderen Profilstrebe (3') an der Längswand an einem Knopfteil (22') festlegbar ist.

13. Haltevorrichtung nach Anspruch 11 oder 12, dadurch gekennzeichnet, daß die Öffnung (21) im Bereich der Rückwand (10) an einem vertikal oder horizontal verlaufenden Formansatz (22) vorgesehen ist.

14. Haltevorrichtung nach einem der Ansprüche 1 bis 13, dadurch gekennzeichnet, daß die Gitterstruktur (4) in ihren Konturen mit jeweiligen Formradien (R,R') versehen ist.

15. Haltevorrichtung nach einem der Ansprüche 1 bis 14, dadurch gekennzeichnet, daß der Einbaubehälter (1) mit einer Halteplatte (14) und jeweiligen Verbindungselementen (13) als eine Montage-Baueinheit ausgebildet ist.
